# EUROPÄISCHE PATENTANMELDUNG

(11) **EP 2 055 262 A2**
(43) Veröffentlichungstag der Anmeldung: **06.05.2009**
(21) Anmeldenummer: 08019336.0
(22) Anmeldetag: 04.11.2008
(51) Int. Cl.: A61C 13/277

(54) **Zahnprothesen-Konstruktionen und ihre Befestigung an den gesunden Zähnen**

(30) Priorität: 05.11.2007 DE 102007053010
(71) Anmelder: Ouranos, Emmanuel, 50354 Hürth (DE)
(72) Erfinder: Ouranos, Emmanuel, 50354 Hürth (DE)

(57) **Zusammenfassung**

Die Zahnprothese sollte nicht wie bisher gesunde Zähne in ihrer Gestalt und Substanz gefährden, indem ein künstlicher Zahn in Form einer Brücke an den benachbarten Zähne durch Kappen über diesen Zähnen befestigt wird.
Der eingepaßte Zahn **(1)** besitzt zwei Umfassungen (Taschen) **(10)** für die an beiden Seiten anschließenden gesunden Zähne **(2),** in der Art, daß die gesunden Zähne die Zahnprothese von beiden Seiten festhalten. Die Zahnprothese **(1)** besitzt an beiden Seiten Schließvorrichtungen, die sich zwischen Prothese und gesundem Zahn verkeilen, so daß beim Beißen auf klebrige Süßigkeiten (wie Bonbons, Kaugummi etc.) die Prothese nicht hochgezogen werden kann und sich von ihrem Platz entfernt.

Eine Art Schlinge oder Schelle, die die ganze Fläche des Zahnes **(2)** innen und außen bedeckt, z.B. aus Titan- oder Platinblech, werden nur dann nötig sein, wenn einer der Zähne **(2)** ein Stiftzahn ist oder der unterstützende Zahn nicht stabil genug ist.

## Beschreibung

Ich habe diese Prothese entwickelt, um, so weit wie möglich, den Menschen in Zukunft zu ersparen, daß Zahnärzte, um in einer Zahnlücke einen künstlichen Zahn einsetzen und befestigen zu können, zwei benachbarte gesunde Zähne (**2**) in Mitleidenschaft ziehen und beschädigen. Bei meiner Zahnprothese oder Zahnprothesen handelt es sich um einen künstlichen Zahn, der in die Zahnlücke eingepaßt wird. Der künstliche Zahn (**1**) kann nicht als Brücke bezeichnet werden, da er nicht an zwei benachbarten, bisher gesunden Zähnen (**2**) in Form von Kappen (Brücke) befestigt ist.

Ich habe mir die Aufgabe gesetzt, eine Zahnprothese zu entwerfen, die durch einen Befestigungsmechanismus an die im Gebiß verbliebenen gesunden Zähne sicher eingepaßt wird.

Allgemein gesehen sind die Zähne (**2**) normaler Weise an der Kau-Fläche breiter, nach unten gehend werden sie schmaler.
Die Zwischenlücke zwischen den Zähnen ist meistens keilförmig. Diese Keilförmigkeit nutze ich, um den künstlichen Zahn (1) an den: benachbarten Zähnen (**2**), rechts und links, zu befestigen.

Der eingepaßte Zahn (**1**) besitzt zwei Umfassungen (Taschen) (**10**) für die an beiden Seiten anschließenden gesunden Zähne (2), in der Art, daß die gesunden Zähne die Zahnprothese von beiden Seiten festhalten. Die Zahnprothese (**1**) besitzt an beiden Seiten Schließvorrichtungen, die sich zwischen Prothese und gesundem Zahn verkeilen, so daß beim Beißen auf klebrige Süßigkeiten (wie Bonbons, Kaugummi etc.) die Prothese nicht hochgezogen werden kann und sich von ihrem Platz entfernt.
Eine Art Schlinge oder Schelle, die die ganze Fläche des Zahnes (**2**) innen und außen bedeckt, z.B. aus Titan- oder Platinblech, werden nur dann nötig sein, wenn einer der Zähne (**2**) ein Stiftzahn ist oder der unterstützende Zahn nicht stabil genug ist.

Wenn wir den künstlichen Zahn (**1**) in die Lücke des fehlenden Zahnes hinunterdrücken, werden die seitlichen umgekehrt geformten Keile (**5**), die sich in den Taschen (**10**) und außen an beiden Seiten des künstlichen Zahns (**1**) befinden, von außen nach innen gedrückt, bis der Zahn (**1**) hinuntergelaufen ist und sich auf das Zahnfleisch gesetzt hat. Der Feder- oder der Schlauchdruck schiebt die kleinen Keile (**5**) wieder nach außen, an den mittleren Teil des Zahnes (**2**) bis oberhalb des Zahnfleisches und verkeilt die Prothese fest an die gesunden Zähne. Der künstliche Zahn ist damit befestigt.

Jeder, der den künstlichen Zahn (**1**) in seinem Gebiß hat, kann, wann er will, mit einem festen Ziehen den Zahn (**1**) fassen und wieder nach oben ziehen. Die Feder oder der Schlauch im Innern des Zahnes (**1**) geben wieder nach, und der Zahn kommt heraus, um z.B. gesäubert und wieder eingesetzt zu werden.

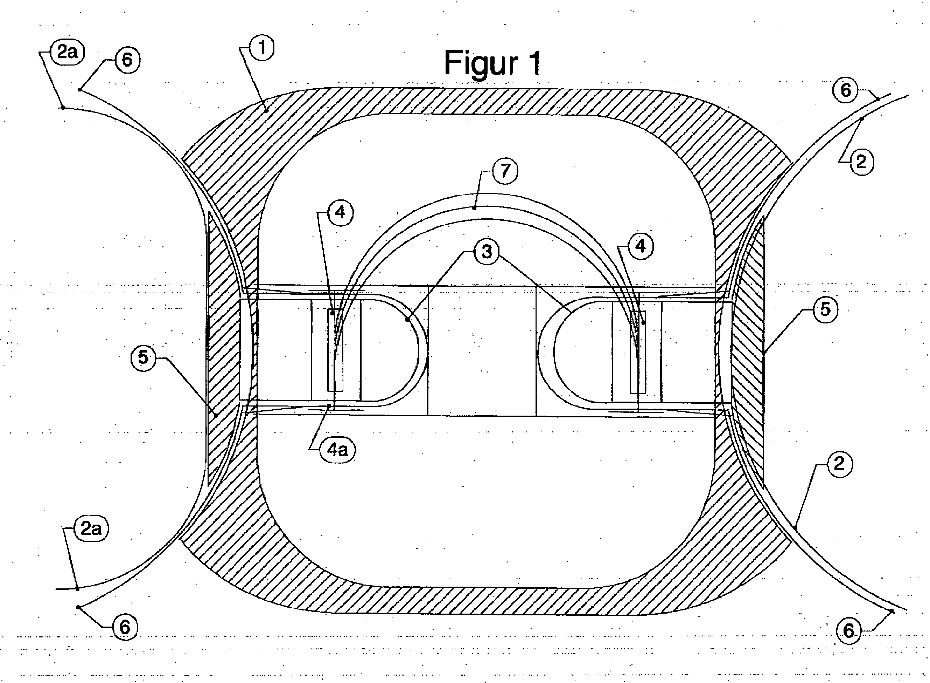

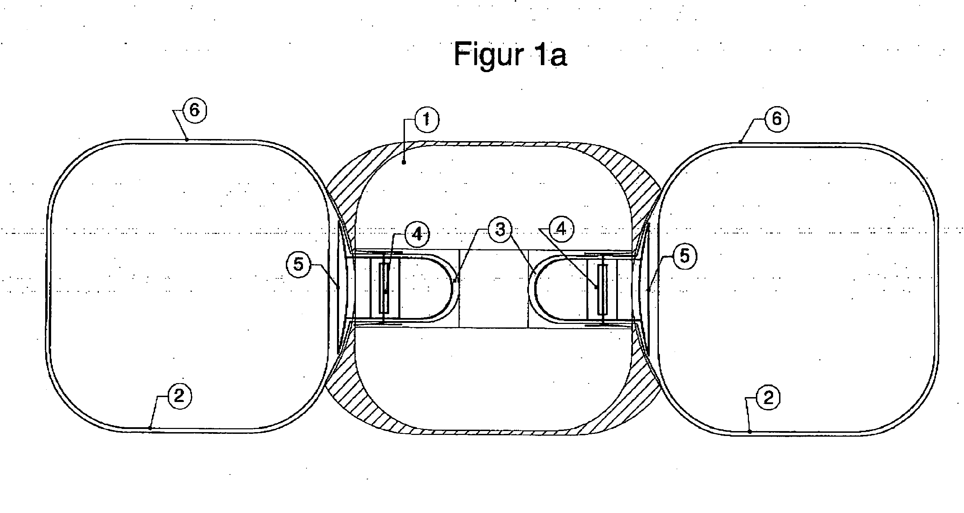

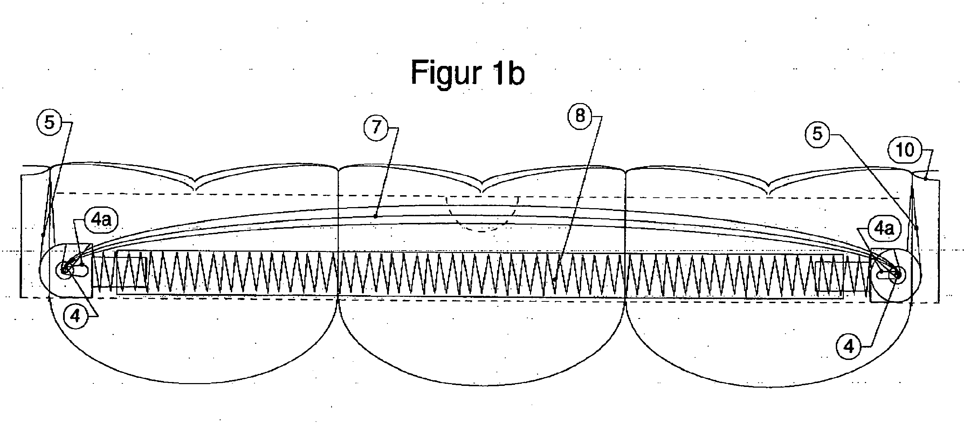

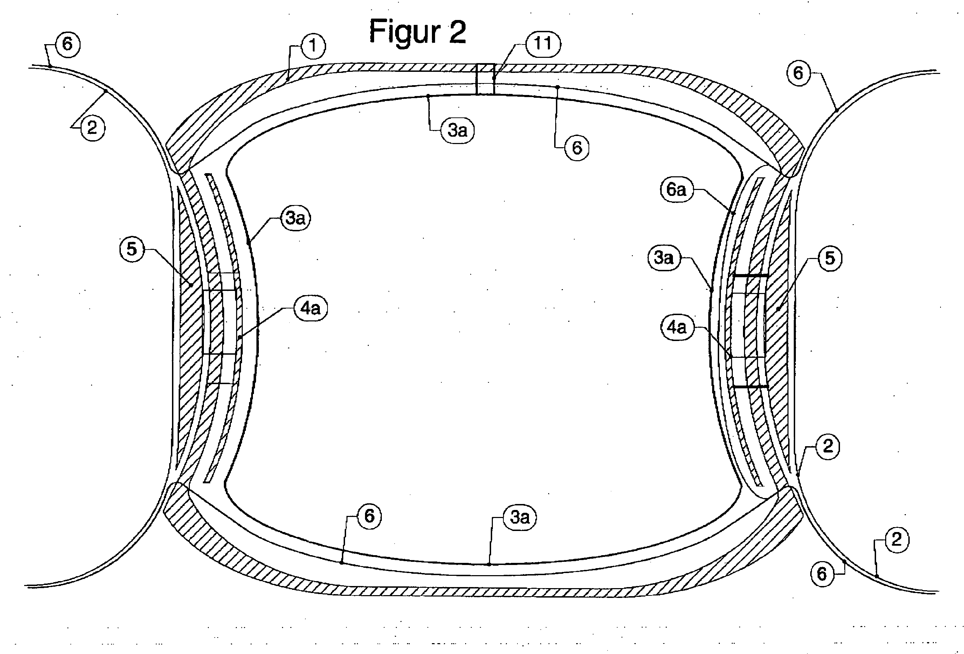

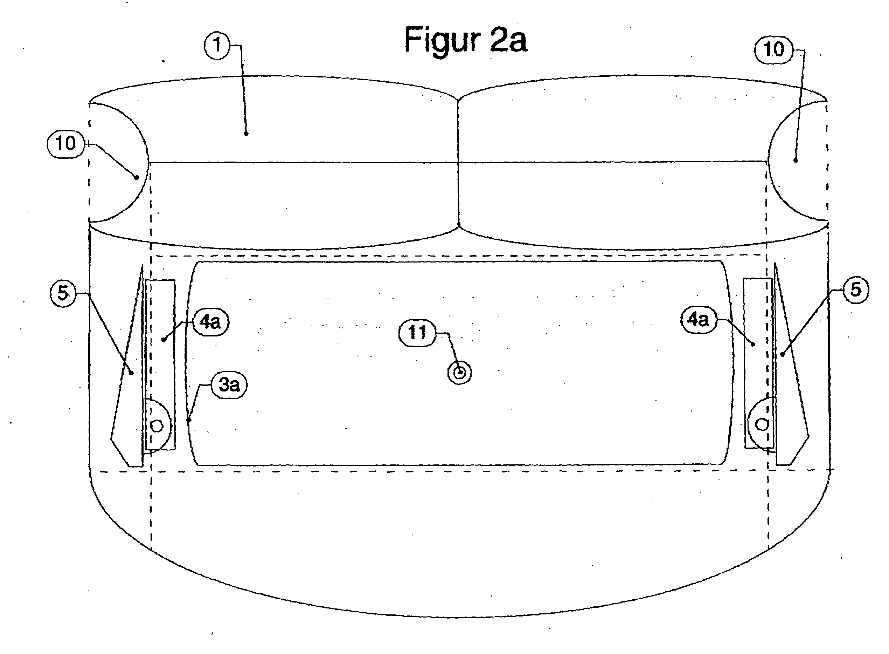

Der Befestigungs-Mechanismus und die Konstruktion des künstlichen Zahnes (1) werden in den **Figuren 1****,** **1a****,** **1b****,** **2** und **2a** anhand jeweils von Ausführungsbeispielen erläutert.
Alle Darstellungen der Zähne sind schematisch.

Figur 1 zeigt im Querschnitt, waagerecht geschnitten, rechts den gesunden Zahn (**2**), auf den in der Mitte der künstliche Zahn (1) folgt. Links ist im Beispiel ein Stiftzahn (**2a**), der von einer Schelle (**6**) umfaßt wird, die von dem Zahnhalter-Mechanismus (**3**) im Innern des künstlichen Zahnes (**1**) ausgeht.

Wenn der künstliche Zahn (**1**) in die Zahnlücke hineingeschoben wird, schiebt die Feder des Zahnhalter-Mechanismus (**3**) den Keil (**5**) derart, daß die Schelle (**6**) den Zahn (**2**) ganz umfaßt. Die Schelle (**6**) wird durch ihre seitlichen Verdickungen im Innern des Zahnes (1) verkürzt und fest auf den Zahn (**2**) gezogen.

Der künstliche Zahn (**1**) in der Mitte der Darstellung von Figur 1 zeigt den Zahnhalter-Mechanismus (**3**), rechts und links im Innern des künstlichen Zahnes (**1**), der jeweils! eine Halterung (**4**) einer ein-bis dreifachen Bogenfeder (**7**) beinhaltet.
Bogenfeder (**7**) schematisch dargestellt. Der Zahnhalter-Mechanismus (**3**) ist verbunden mit außen, rechts und links von dem künstlichen Zahn (**1**) befindlichen Keilen (**5**). Die Bogenfedern (**7**), befestigt an der Halterung (**4**), die gleichzeitig einen Schiebemechanismus für die Keile (**5**) darstellen, schieben den Keil (**5**) an den Zahn (**2**), so daß beim Einpassen des künstlichen Zahnes (**1**) der Keil (**5**) den Zahn (**2**) bis an seinen mittleren Teil, am Beginn des Zahnfleisches, faßt.

Jeweils am Stift (**4**) (Halterung ist die Bogenfeder (**7**) von beiden Seiten befestigt. Diese Halterung (**4**) bewegt sich vorwärts und rückwärts in einem Schlitz (**4a**), der in dem Schiebemechanismus angebracht ist. Diese Halterung (**4**), die die Feder (**7**) hält, ist außen mit zwei Rosetten befestigt, von jeder Seite eine Rosette. Diese Rosette dient dazu, die Schelle (**6**) zusammenzuziehen, weil sich zwei kleine Keile oder Verdickungen von jeder Seite an der Schelle (**6**) im Innern des Zahnes (**1**) befinden. Daher ist die Schelle (**6**) gezwungen, sich fest um den Zahn (**2**) zu ziehen.

Figur **1a** zeigt im Beispiel, daß die Schelle (**6**) zur Sicherung der Befestigung die beiden Zähne (**2**) ganz umfaßt, wenn zwei neben einander stehende Zähne (**2**) Stiftzähne sind.

Figur **1b** zeigt drei Zähne (**1**), die untereinander verbunden sind, als Brücke. Diese drei Zähne sind innen verbunden durch eine Druckfeder (**8**), die in einem Röhrchen liegt, um die Kraft der Feder stabil weiterzuleiten. (**7**) stellt eine ein-bis dreifache Bogen-Feder dar, die von Befestigungmechanismen (**4**) von links nach rechts sich ausdehnt, um jeweils die Keile (**5**) an die nachfolgenden Zähne (**2**) zu schieben und festzuhalten.

Druckfeder (**8**) oder Bogenfeder (**7**) können auch alternativ zum Einsatz kommen. (**10**) sind Seitentaschen am künstlichen Zahn (**1**), die an die gesunden Zähne (**2**) fassen. Figur 2 zeigt eine andere Lösung des Schiebemechanismus, bei der im künstlichen Zahn (**1**) anstelle der Federn ein kugelförmiger Schlauch (**3a**) eingebaut ist, der wie ein Autoreifenschlauch aufgeblasen wird. An der inneren Seite des künstlichen Zahnes, von der Seite der Zunge, ist die Stelle des Luftventils (**11**). Von hier aus wird der Schlauch (**3a**) so aufgeblasen, so daß er die Hebel (**4a**) im Innern des künstlichen Zahnes (**1**), die verbunden sind mit den Keilen (**5**), nach außen drückt. Die Schelle (**6**), die die Zähne (**2**) im ganzen umfaßt und im Inneren von Zahn (**1**) an den beiden Seitenwände verläuft, kann durch Aufblasen von Schlauch (**3a**), der das gesamte Innere des Zahnes (**1**) füllt, an die Wände von (**1**) gedrängt werden, so daß dadurch die Umfassung um die Zähne (**2**) enger gemacht wird, und sich die Schelle (**6**) an die Zähne (**2**) fest anzieht. Falls die Schelle (**6**) nur einen Zahn (**2**) umfassen soll, verläuft sie ringförmig im Innern des Zahnes (**1**) als Schelle (**6a**) um den Schlauch **(3a**) herum. Sie hat keine Verbindung zu der anderen Seite außen von Zahn (**1**).

Figur 2a, im Querschnitt senkrecht, zeigt den künstlichen Zahn (**1**) von der Kau-Fläche aus.

Es sind dargestellt: rechts und links die Seitentaschen (**10**).

Im Inneren des Zahnes (**1**) befindet sich der nahezu kugelförmige Schlauch (3a), der durch die Hebel (**4a**) die Keile (**5**) nach außen schiebt. (**11**) stellt das Luftventil an der Außenfläche, von der inneren Seite, des Zahnes (**1**) dar.

Die Auswahl des künstlichen Zahnes (**1**), sein Einpassen im Gebiß und die Form seiner Befestigung an den Zähnen (**2**) bleiben dem Zahnarzt Überlassen.

Es ist mir klar, daß ich mich bei dem inneren Aufbau des künstlichen Zahnes (**1**) und seiner Befestigung im Bereich der Mikro-Mechanik bewege. Ich denke jedoch, daß die Technik auf diesem Gebiet so weit fortgeschritten ist, auch diese Konstruktionen verwirklichen zu können.

## Patentansprüche

1. Zahnprothesen-Konstruktionen und ihre Befestigungen an den gesunden Zähnen; aufweisend,
- einen künstlichen Zahn (**1**), der einen Zahnhalter-Mechanismus (**3**) rechts und links im Inneren besitzt,
- der Zahnhalter-Mechanismus (**3**), jeweils eine Halterung (**4**) einer ein- bis dreifachen Bögenfeder (**7**) beinhaltet, die gleichzeitig einen Schiebemechanismus, für die rechts und links befindlichen Keile (**5**) ausbildet und
- der künstliche Zahn (**1**) außen, links und rechts, zwei Umfassungen (**10**), wie Seitentaschen besitzt, um die an beiden Seiten anschließenden gesunden Zähne (**2**) zu fassen,
- die Keile (**5**) jeweils in den beiden seitlichen Umfassungen (**10**) angeordnet sind,
- wobei sich die Keile (**5**) zur Spitze des künstlichen Zahns (**1**) hin verjüngen, und
- den künstlichen Zahn (**1**) an den benachbarten gesunden Zähnen (**2**) befestigen.

2. Zahnprothesen-Konstruktionen und ihre Befestigungen an den gesunden Zähnen gemäß Anspruch 1,
wobei die Keile (**5**) so gestaltet sein sollen, daß sie nach Einsetzen des künstlichen Zahns (**1**) von der Oberkante des Zahnfleisches bis zum mittleren Teil (= halben Höhe) des künstlichen Zahnes (**1**) reichen,
wobei die Keile (**5**) durch den Federmechanismus (**3**) gegen die beiden Stützzähne (2) gedrückt werden.

3. Zahnprothesen-Konstruktionen und ihre Befestigungen an den gesunden Zähnen gemäß Anspruch 1,
wobei, wenn der künstliche Zahn (**1**) in die Zahnlücke hineingeschoben wird; die Feder des Zahnhalter-Mechanismus (**3**) den Keil (**5**) schiebt derart, daß die Schelle (**6**) den Zahn (**2**) ganz umfaßt, und die Schelle (**6**) durch ihre seitlichen Verdickungen im Innern des Zahnes (**1**) verkürzt und fest auf den Zahn (**2**) gezogen wird.

4. Zahnprothesen-Konstruktionen und ihre Befestigungen an den gesunden Zähnen gemäß Anspruch 1,
- wobei die Bogenfeder (**7**) jeweils an der (Halterung) (**4**) von beiden Seiten befestigt ist,
- wobei diese Halterung (**4**) sich vorwärts und rückwärts in einem Schlitz (**4a**) bewegt, der in dem Schiebemechanismus angebracht ist,
- wobei diese Halterung(**4**), die die Feder (**7**) hält, außen mit zwei Rosetten befestigt ist, von jeder Seite eine Rosette, die dazu dient, die Schelle (**6**) zusammenzuziehen, weil sich · zwei kleine Keile oder Verdickungen von jeder Seite an der Schelle (**6**) im Innern des Zahnes (1) befinden, so daß die Schelle (**6**) gezwungen ist, sich fest um den Zahn (2) zu ziehen.

5. Zahnprothesen-Konstruktionen und ihre Befestigungen an den gesunden Zähnen gemäß Anspruch 1,
- wobei anstelle des künstlichen Zahnes (**1**) eine Brücke, die aus drei untereinander verbundenen Zähnen besteht, eingesetzt wird und
- die drei Zähne innen durch eine Druckfeder (8), die in einem Röhrchen liegt, um die Kraft der Feder stabil weiterzuleiten, verbunden werden,
- wobei eine ein- bis dreifache Bogenfeder (7) sich von den Halterungen (4) von links nach rechts ausdehnt, um jeweils die Keile (**5**) an die benachbarten gesunden Zähne (2) zu schieben und festzuhalten, wobei Druckfeder (8) und Bogenfeder (7) auch alternativ zum Einsatz kommen können.

6. Zahnprothesen-Konstruktionen und ihre Befestigungen an den gesunden Zähnen gemäß Anspruch 1,
- wobei die Schelle (**6**) zur Sicherung der Befestigung die Zähne (2) ganz umfaßt, wenn zwei nebeneinander stehende Zähne (2) Stiftzähne sind.

7. Zahnprothesen-Konstruktionen und ihre Befestigungen an den gesunden Zähnen gemäß Anspruch 1,
- wobei die Schelle (**6**) die ganze Fläche des Zahnes (**2**), innen und außen bedecken kann, bestehend aus z.B Titan- oder Platinblech, wenn einer der unterstützenden Zähne ein Stiftzahn ist oder nicht stabil genug ist.

8. Zahnprothesen-Konstruktionen und ihre Befestigungen an den gesunden Zähne,
- wobei als Schiebemechanismus im künstlichen Zahn (1) anstelle der Federn ein kugelförmiger Schlauch (3a) eingebaut ist, der aufgeblasen wird und von außen, an der inneren Seite des künstlichen Zahnes ein Luftventil (11) besitzt.

9. Zahnprothesen-Konstruktionen und ihre Befestigungen an den gesunden Zähnen gemäß Anspruch 8,
- wobei der Schlauch (**3a)** so aufgeblasen wird, daß er die Hebel (**4a**) im Innern des künstlichen Zahnes (**1**), die verbunden sind mit den Keilen (**5**), nach außen drückt.

10. Zahnprothesen-Konstruktionen und ihre Befestigungen an den gesunden Zähnen gemäß Anspruch 8,
- wobei die Schelle (**6**), die die Zähne (**2**) im ganzen umfaßt und im Inneren von Zahn (**1**) an den beiden Seitenwänden verläuft, durch Aufblasen von Schlauch (3a), der das gesamte Innere des Zahnes (**1**) füllt, an die Wände von (1) gedrängt werden kann, so daß dadurch die Umfassung um die Zähne (2) enger gemacht wird, und sich die Schelle (6) an die Zähne (2) fest anzieht.

11. Zahnprothesen-Konstruktionen und ihre Befestigungen an den gesunden Zähnen gemäß Anspruch 8,
- wobei, wenn die Schelle (**6**) nur einen Zahn (2) umfassen soll, sie ringförmig im Innern des Zahnes (**1**) als Schelle (**6a**) um den Schlauch (**3a**) herum verläuft, und sie keine Verbindung zu der anderen Seite außen von Zahn (**1**) hat.
